# EUROPÄISCHE PATENTSCHRIFT

(11) **EP 1 119 462 B1**
(45) Veröffentlichungstag und Bekanntmachung des Hinweises auf die Patenterteilung: **18.12.2002**
(21) Anmeldenummer: 99947080.0
(22) Anmeldetag: 05.10.1999
(51) Int. Cl.: B60G 11/23, B60G 11/18, B60G 9/00, B62D 21/18, B60B 35/02

(54) **FAHRZEUGUNTERBAU**
VEHICLE UNDERCARRIAGE
CHASSIS DE VEHICULE

(30) Priorität: 06.10.1998 AT 166498
(43) Veröffentlichungstag der Anmeldung: 01.08.2001
(73) Patentinhaber: Wachauer, Oskar, 8795 Hieflau (AT)
(72) Erfinder: Wachauer, Oskar, 8795 Hieflau (AT)
(74) Vertreter: Krause, Peter
(86) Internationale Anmeldenummer: AT9900238
(87) Internationale Veröffentlichungsnummer: WO00020237

(56) Entgegenhaltungen:
- WO-A-88/00534
- WO-A-97/12772
- DE-A- 4 444 850
- DE-A- 19 739 064
- FR-A- 759 949
- FR-A- 1 158 530
- GB-A- 684 538
- GB-A- 734 267
- GB-A- 839 226
- GB-A- 941 164
- US-A- 2 049 474
- US-A- 3 687 479
- US-A- 5 411 286
- PATENT ABSTRACTS OF JAPAN vol. 009, no. 282 (M-428), 9. November 1985 (1985-11-09) & JP 60 124512 A (TOYODA JIDO SHOKKI SEISAKUSHO KK), 3. Juli 1985 (1985-07-03)

## Beschreibung

Die Erfindung bezieht sich auf einen Fahrzeugunterbau bzw. ein Chassis für ein Fahrzeug, wie sie im Anspruch 1 bezeichnet werden.

Es sind Fahrgestelle für mehrspurige Kraftfahrzeuge, deren Radfederungen durch Drehfedern ausgeführt sind, seit langem weit verbreitet und bekannt. Dabei sind grundsätzlich zwei verschiedene Ausführungsarten, nämlich die Kurbellenkerachse und die Schwinghebelachse, zu unterscheiden.

Bei der Kurbellenkerachse ist die Radachse auf einem elastisch drehbaren Arm angeordnet, wobei der Arm seine Winkelstellung zur Achsaufhängung unter veränderlicher Radlast verändert. Das Rückdrehmoment steigt vorzugsweise mit der Winkelveränderung, so daß sich an der Radachse eine Rückfederkraft einstellt, die den Massekräften entgegengesetzt ist. Der einzige Freiheitsgrad für eine Bewegung dieser Anordnung ist die elastisch beschränkte Drehung um das Torsionsfederelement, so daß bei genügend steifer Ausbildung der Anordnung in den weiteren Bewegungsrichtungen eine definierte Radführung erreicht wird. Das Torsionsfederelement kann als Metallstab in Achsrichtung der freien Drehbewegung oder als Elastomerfederelement, das vornehmlich durch Scherung verformt wird, ausgeführt sein. Da jedes Rad von je einem Kurbellenker geführt wird, wird eine voneinander unabhängige Beweglichkeit der Räder erreicht, also eine Einzelradaufhängung. Diese aufgezeigte Kurbellenkerachse findet bevorzugt Verwendung in lasttragenden Fahrzeugen, die vergleichsweise hart gefedert sind. Die Drehfeder kann große Drehsteifigkeit aufweisen, so daß diese als Führungselement für die weiteren Freiheitsgrade der Radbewegung ausreichende Steifigkeit besitzt. Von Nachteil ist bei dieser Ausführung, daß in personenbefördernden Fahrzeugen die Federung aus Gründen des Fahrkomforts weicher ausgelegt werden muß. Bei einer weicheren Auslegung der Federung kann die Torsionsfeder aber die Radführung nicht mehr zufriedenstellend bewerkstelligen. Diese unzulässigen Spur- und Sturzveränderungen unter wechselnder Radlast führen zu einem instabilen Fahrverhalten des Fahrzeuges.

Bei der Ausführung einer Schwinghebelachse wird die Federenergie ebenfalls in einem Bauteil gespeichert, das seiner Verdrillung ein entsprechendes Drehmoment entgegensetzt. Der Unterschied zur Kurbellenkerachse besteht darin, daß weitere Bewegungsrichtungen durch gesonderte Bauelemente teilweise einschränkbar sind. So sind Ausführungen bekannt, wo nur die Längsführung des Rades in Fahrtrichtung durch die Federschwinge bewerkstelligt wird. Die Seitenführung und die Einhaltung des Spurund Sturzwinkels wird von der Halbachse des Radantriebes ausgeführt. Durch diese Anordnung ist eine steife Radführung in allen Richtungen, außer der Einfederung, konstruktiv leichter zu erreichen. Es ist aber auch möglich, mittels des Schwinghebels ausschließlich die Einfederung senkrecht zur Aufstandsfläche des Rades zu führen, hingegen alle weiteren Bewegungsrichtungen durch eine geeignete Radaufhängung festzulegen. Als Nachteil ist bei dieser Ausführung der hohe bauliche Aufwand zu betrachten, wodurch auch eine hohe Störanfälligkeit gegeben ist.

Ein gattungsgemäßes Chassis ist aus der FR-A-759949 bekannt.

Der vorliegenden Erfindung liegt die Aufgabe zugrunde, einen Fahrzeugunterbau der eingangs genannten Art zu schaffen, der einerseits die oben aufgezeigten Nachteile vermeidet und bei dem andererseits die konstruktive Einfachheit der Kurbellenkerachse genützt wird, wobei die Einschränkung der mangelnden Radführung bei weich abgestimmter Federung nicht gegeben ist.

Diese Aufgabe der Erfindung wird durch die Merkmale des Anspruches 1 gelöst.
Der sich durch die Merkmale des Kennzeichenteiles des Anspruches 1 ergebende überraschende Vorteil ist darin zu sehen, daß mit einer ausgesprochen einfachen Konstruktion eine optimale Radführung erreicht wird, die ein stabiles Fahrverhalten des Fahrzeuges gewährleistet. Durch die Ausbildung des Hauptrahmens mit Hohlprofilen, die biege- und drillsteif miteinander verbunden sind, ist vorteilhafterweise auch der Aufbau des Fahrzeuges äußerst verwindungssteif. Ferner ist durch die Anordnung der Drehfedern der Vorteil gegeben, daß neben dem gutem Materialausnutzungsgrad für das elastische Element der Federung, die Möglichkeit gegeben ist, Funktionen der Radführung mittels dieser Federung auszuführen. Als Radführungselement wird die biegestarre Verbindungsachse vorgesehen. Darüber hinaus wird durch diese biegestarre Verbindungsachse der Vorteil erzielt, daß die Spur- und Sturzveränderung der Räder einer Verbindungsachse weitgehend starr miteinander gekoppelt ist. Dadurch sind Spurweite, Spur- und Sturzwinkel invariant gegenüber der Ebene durch die Berührungspunkte der Räder auf der Aufstandsfläche.

Vorteilhaft ist weiters eine Ausbildung nach Anspruch 2, da dadurch eine rationelle Fertigung, gegebenenfalls auch mit Schweißrobotern, möglich ist.

Nach einer vorteilhaften Weiterbildung nach Anspruch 3 bzw. Anspruch 4 wird durch diese Drehfedern eine ausreichende Längssteifigkeit in Richtung ihrer Drehachse und in der Ebene senkrecht dazu erreicht.

Durch die Ausbildung nach Anspruch 5 ist es möglich, für den Hauptrahmen eine optimale Biege- und Drillsteifigkeit zu erreichen.

Vorteilhaft ist auch eine Weiterbildung nach Anspruch 6, da die drillsteife Verbindung der Hohlprofile durch die besondere Anordnung der Knotenbleche beiderseits des Profils erreicht wird. Die Knotenbleche sind erforderlich, um mindestens zwei beliebige Profile in wahlfreiem Anschlußwinkel mittels Schweißen starr miteinander zu verbinden. Die Profile können dann senkrechte Trennschnitte aufweisen. Im Gegensatz zu Knotenblechen in herkömmlichen Fachwerkskonstruktionen, in deren Profilstäben vorzugsweise Zug- und Druckkräfte auftreten, müssen in der vorliegenden Konstruktion auch Biege- und Torsionskräfte übertragen werden.

Die Knotenbleche sollen beidseitig an den Profilen angeordnet werden, daß die Schweißnaht in der neutralen Ebene der hauptsächlichen Biegebeanspruchung der jeweiligen Anschlußprofile liegt. Damit kann eine Dehnbelastung der Schweißnaht für diesen Beanspruchungsfall vermieden werden. Dieser Umstand wirkt sich vorteilhaft auf die Schweißnahtfestigkeit aus.

Durch die beidseitige Anordnung der Knotenbleche an den Anschlußprofilen können aber auch Belastungen mit allgemeiner Lastrichtung, wie beispielsweise Biegen, Torsion, Zug oder Druck, ohne ungünstige Beanspruchung der Schweißnähte übertragen werden. Die Art und Höhe des Belastungskollektivs wirkt sich konstruktiv auf die Gestalt des Knotenbleches aus. Das Konstruktionsprinzip selbst bleibt unbeeinflußt.

Der Vorteil dieser Art von Knotenverbindung besteht darin, daß auch für komplexe Fachwerkgeometrien unter beliebigen Beanspruchungen senkrecht zur Profilachse getrennte Profilabschnitte, die also einfach in der Herstellung sind, verwendet werden können.

Vorteilhaft ist auch eine Ausbildung nach Anspruch 7, da Profile dieser Art hohe Biegesteifigkeit mit niedrigem Drillwiderstand vereinen.

Durch die Ausbildung nach Anspruch 8 und der Weiterbildung nach Anspruch 9 wird erreicht, daß der Drillwiderstand der Verbindungsachse entsprechend der Länge der Verstärkung variiert und im voraus berechnet werden kann. Da das Verhältnis zwischen Biegesteifigkeit und Drillwiderstand eines Profilstabes in weiten Bereichen durch die Gestaltung des Profilquerschnittes, wie Wanddicke, Abmessungen und/oder Profilgestalt, verändert werden kann, ergibt sich folglich die Möglichkeit, die Einzelradeinfederungen einer Achse miteinander zu koppeln. Eine entsprechende Erhöhung des Drillwiderstandes der Verbindungsachse bewirkt eine stärkere Kopplung der Radeinfederung, so daß die Rollneigung des Fahrzeuges, also die Drehbewegung um die Längsachse, gezielt verhindert werden kann. Dies ist insbesondere bei Aufbauten, die einen hohen Fahrzeugschwerpunkt bewirken unumgänglich.

Von Vorteil ist aber auch eine Ausbildung nach den Ansprüchen 10, 11 und 12. Eine unterschiedliche Radeinfederung bewirkt zwangsläufig eine Verschränkung der Verbindungsachse gegenüber dem Fahrzeugaufbau. Den Schwinghebeln, die einerseits starr mit der Verbindungsachse verbunden sind, andererseits ausschließlich eine Drehbewegung quer zur Fahrtrichtung ausführen können, wird daher in diesem Fall eine Verdrillung aufgezwungen. Die Schwinghebel sollen daher vorteilhafterweise drillweich in ihrer Längsachse ausgeführt werden, damit die notwendige Achsverschränkung ausgeführt werden kann. Dies kann durch eine dünnwandige, flache Gestalt der Schwinghebel erreicht werden. Seitenkräfte, wie sie bei jeder Richtungsänderung auf das Fahrzeug wirken, würden zu einer unzulässigen Verformung der Schwinghebel quer zur Fahrtrichtung führen.

Dabei erweist sich eine Ausgestaltung nach Anspruch 13 als vorteilhaft, da bei der Anordnung auf dieser Linie, der Drehpunkt des Schwinghebels während eines Bremsmanövers der Vorderradbremsen nicht durch Drehmomente aufgrund der Bremskräfte zusätzlich belastet ist, so daß keine Federrückwirkung durch die Bremskräfte auftritt. Natürlich eignet sich aber diese Anordnung sowohl für die Vorder- als auch für die Hinterachse.

Vorteilhaft ist auch eine Ausbildung nach Anspruch 14, da dadurch eine rationelle Fertigung der Bauteile gewährleistet ist, wobei auch keine weitere Endbearbeitung mehr anfällt.

Besonders vorteilhaft ist die Ausbildung nach Anspruch 15, wodurch das Lenken des Fahrzeuges aufgrund dieser Konstruktion unabhängig von der Einfederung ist. Die Spurstange ist normalerweise über ein Kugelgelenk mit den Lenkhebeln der Achsschenkel verbunden. Damit ist in gewissem Umfang eine Schwenkbewegung der Spurstange um ihre Längsachse gegeben. Ein Zwischenhebel, der um eine zur Spurstange parallele Achse schwenkbar angeordnet ist, kann gemeinsam mit dem Spurstangenhebel Abstandsänderungen ausgleichen. An der Spurstange ist starr ein Spurstangenhebel angeordnet, der am oberen Ende ein Drehgelenk, dessen Drehachse parallel zur Spurstange liegt, trägt. An der Drehachse des Spurstangenhebels ist ein Zwischenhebel angelenkt, der somit um eine zur Spurstange parallele Achse schwenkbar ist. Der Zwischenhebel ist gelenkig mit dem Lenkexzenter verbunden. Diese Konstruktion überträgt Bewegungen des Lenkexzenters parallel zur Spurstange unmittelbar auf die Gelenke der Achsschenkel, kann jedoch den veränderlichen Abstand des Lenkexzenters senkrecht zur Spurstange ausgleichen.

Die Erfindung wird im nachfolgenden anhand der in den Zeichnungen dargestellten Ausführungsbeispiele näher erläutert.

Es zeigen:
- Fig. 1: eine Schrägansicht des erfindungsgemäßen Fahrzeugunterbaus;
- Fig. 2: eine Seitenansicht des erfindungsgemäßen Fahrzeugunterbaus;
- Fig. 3: eine Draufsicht eines erfindungsgemäßen Fahrzeugunterbaus;
- Fig. 4: eine Schrägansicht eines Teiles der Lenkkonstruktion des erfindungsgemäßen Fahrzeugunterbaus.

Einführend sei festgehalten, daß in dem beschriebenen Ausführungsbeispiel gleiche Teile mit gleichen Bezugszeichen bzw. gleichen Bauteilbezeichnungen versehen sind, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben wie z.B. oben, unten, seitlich usw. auf die unmittelbar beschriebenen so wie dargestellten Figuren bezogen und sind bei einer Lageänderung sinngemäß auf die neue Lage zu übertragen. Weiters können auch Einzelmerkmale aus dem gezeigten Ausführungsbeispiel für sich eigenständige, erfindungsgemäße Lösungen darstellen.

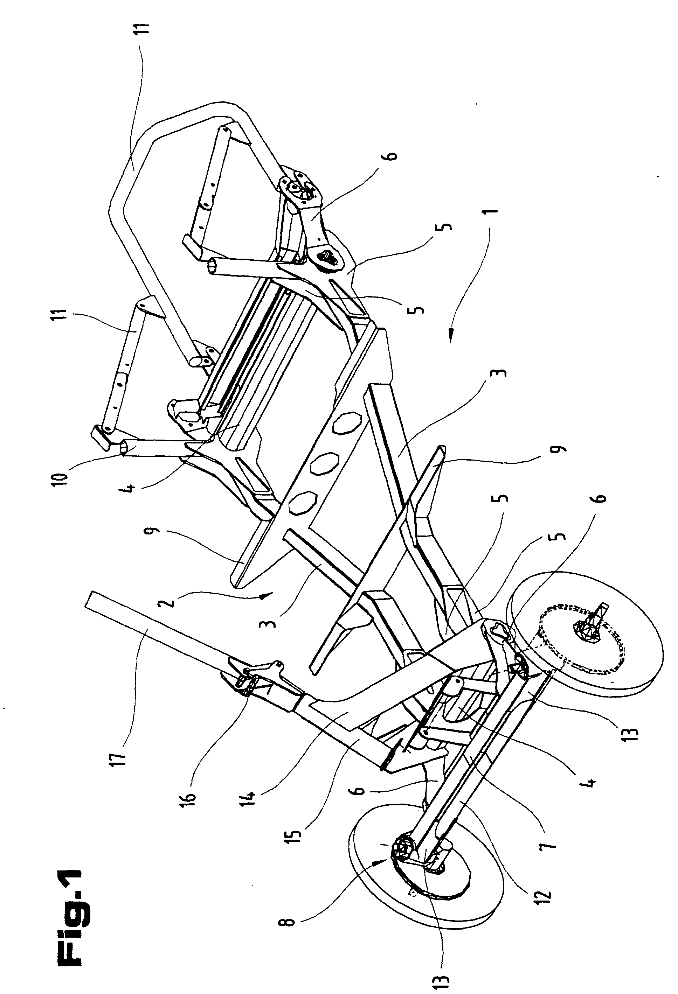

Gemäß der Fig. 1 ist ein Fahrzeugunterbau 1 bzw. ein Chassis für ein vierrädriges, angetriebenes Fahrzeug, das zur Beförderung mindestens einer Person dient, aufgezeigt.

Dieser Fahrzeugunterbau 1 besteht in seiner Grundkonstruktion aus einem Hauptrahmen 2, der aus einer etwa ringförmigen Anordnung von geschlossenen Hohlprofilen ausgeführt ist. Dieser Hauptrahmen 2 wird vorzugsweise aus zwei Seitenhohlprofilen 3 und zwei diametral gegenüberliegenden Drehfedern 4 gebildet, wobei die Drehachsen der Drehfedern 4 quer zur Fahrtrichtung des Fahrzeuges angeordnet sind. Durch diese Ausbildung des Hauptrahmens 2 mit Hohlprofilen ist auch ein verwindungssteifer Aufbau des Fahrzeuges möglich. Ermöglicht wird dies dadurch, daß jedes Seitenhohlprofil 3 des Hauptrahmens 2 mit den Drehfedern 4 biege-und drillsteif miteinander verbunden sind. Diese Biege- und Drillsteifigkeit wird dadurch erreicht, daß die Verbindung über vorzugsweise ebene Knotenbleche 5 erfolgt. Die Knotenbleche 5 werden beidseitig an den Seitenhohlprofilen 3 angeordnet, wobei die Schweißnaht in der neutralen Ebene der hauptsächlichen Biegebeanspruchung der jeweiligen Anschlußprofile, in diesem Fall der Seitenhohlprofile 3, liegt. Dehnbelastungen der Schweißnaht können für einen derartigen Beanspruchungsfall vermieden werden, wodurch Vorteile bei der Schweißnahtfestigkeit gegeben sind. Ferner ist an den Drehfedern 4 über Schwinghebel 6 eine biegestarre Verbindungsachse 7 vorgesehen. Die Verbindungsachse 7 weist an ihren Enden eine Lagerung 8 für die Räder des Fahrzeuges auf.

Die Seitenhohlprofile 3 weisen quer zur Fahrtrichtung angeordnete Aufnahmen 9 für die Verkleidung des Fahrzeuges auf. Ferner können auch an den Knotenblechen 5 für die in Fahrtrichtung gesehene hintere Drehfeder 4 etwa senkrecht nach oben gerichtete Stützen 10 für diese Verkleidung angeordnet werden. Weitere Anbauten bzw. Tragrahmen 11, auch wenn sie über die hintere Drehfeder 4 hinaus ragen, könnten mittels der Knotenbleche 5 am Hauptrahmen 2 und/oder an den Stützen 10 befestigt werden.

Die Verbindungsachse 7 ist im Bereich zwischen den Schwinghebeln 6 als drillweiches offenes Profil 12 ausgebildet. Im Bereich zwischen Schwinghebel 6 und Lagerung 7 ist eine biege- und drillsteife Verstärkung 13 vorgesehen, so daß durch die Art und Weise der Verstärkung 13 gegebenenfalls ein Hohlprofil entsteht. Durch die entsprechende Wahl der Länge der Verstärkung 13 wird der Drillwiderstand der Verbindungsachse 7 entsprechend variiert. Nachdem das Verhältnis zwischen Biegesteifigkeit und Drillwiderstand eines Profilstabes, in diesem Fall der Verbindungsachse 7, in weiten Bereichen durch die Gestaltung des Profilquerschnitts verändert werden kann, ist die Möglichkeit gegeben, die Einzelradeinfederungen einer Achse miteinander zu koppeln. Ein hoher Drillwiderstand bringt eine stärkere Kopplung der Radeinfederung, wodurch die Rollneigung des Fahrzeuges gezielt verhindert werden kann. Darüber hinaus ist durch diese Konstruktion auch eine kontrollierte Verwindung der Verbindungsachse 7 erreichbar.

An der Drehfeder 4, betrachtet in Fahrtrichtung an der vorderen Drehfeder 4, ist eine Steuerkonsole 14 für die Lenkung des Fahrzeuges angeordnet. An dieser Steuerkonsole 14, die zweiteilig ausgeführt sein kann und jeder Teil nahe dem Schwinghebel 6 angeordnet ist, ist ein Steuerrohr 15 mit einem innenliegenden Lenkrohr befestigt. An dieses Steuerrohr 15 schließt über ein Verbindungsglied 16 ein Lenker 17 an.

Generell von Vorteil ist bei dieser Art der Konstruktion, daß alle Verbindungen der einzelnen Teile zueinander ausschließlich als Schweißnähte ausführbar sind. Ferner ist es auch technisch gesehen optimal und vor allem in Hinblick auf die Fertigung auch rationell, daß sämtliche Hohlprofile, wie beispielsweise das Seitenhohlprofil 3, die Drehfeder 4 oder die Verbindungsachse 7, senkrechte Trennschnitte aufweisen.

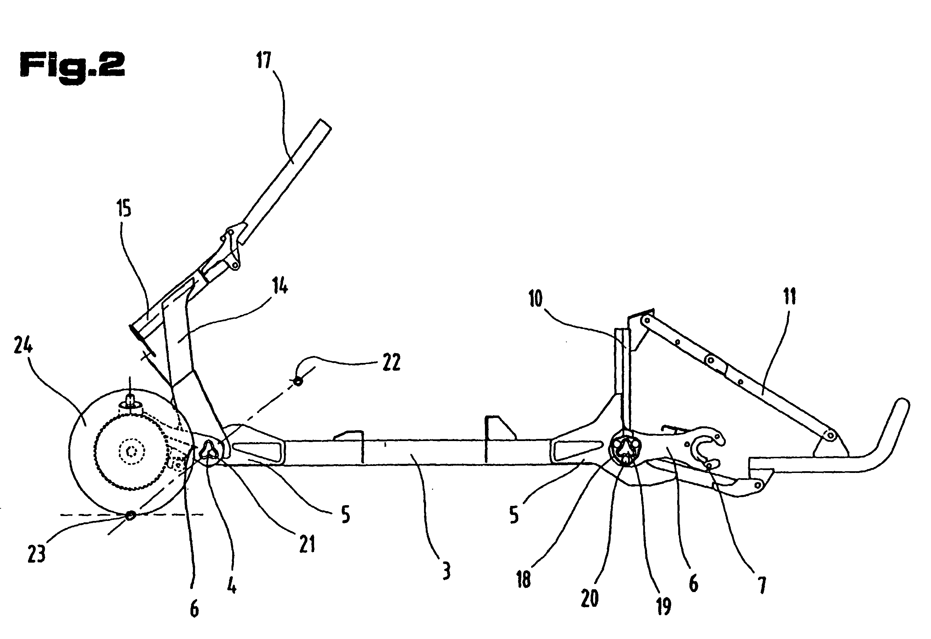

Entsprechend der Fig. 2 sind an den Seitenhohlprofilen 3 über die Knotenbleche 5 die Drehfedern 4 befestigt. Ferner sind an den Drehfedern 4 die Schwinghebel 6 sowohl für die vordere als auch für die hintere Verbindungsachse 7 vorgesehen. Des weiteren ist an der Stütze 10 bzw. am Knotenblech 5 für die hintere Drehachse 4 der Tragrahmen 11, beispielsweise für einen Aufnahmekorb des Fahrzeuges, vorgesehen. Ebenso ist an der vorderen Drehfeder 4 die Steuerkonsole 14 mit dem Steuerrohr 15 und dem Lenker 17 angeordnet.

Die Drehfeder 4 besteht aus zwei konzentrisch angeordneten Hohlprofilen, wobei das äußere Hohlprofil ein Drehfederrohr 18 und das innere Hohlprofil eine Drehfederachse 19 ist. Zwischen dem Drehfederrohr 18 und der Drehfederachse 19 ist mindestens ein Elastomerelement 20 angeordnet. Durch die Anordnung dieser Drehfedern 4 wird eine ausreichende Längssteifigkeit in Richtung ihrer Drehachse und in der Ebene senkrecht dazu erreicht.

Die Schwinghebel 6 sind mit der Verbindungsachse 7 starr verbunden. Darüber hinaus sind die Schwinghebel 6 in ihrer Längsachse drillweich ausgeführt und weisen eine dünnwandige flache Form auf. Wie bereits erwähnt, bewirkt eine unterschiedliche Radeinfederung zwangsläufig eine Verschränkung der Verbindungsachse 7 gegenüber dem Fahrzeugaufbau. Den Schwinghebeln 6, die mit der Verbindungsachse 7 starr verbunden sind, und ausschließlich eine Drehbewegung quer zur Fahrtrichtung ausführen, wird daher in diesem Fall eine Verdrillung aufgezwungen. Die Schwinghebel 6 werden daher drillweich in ihrer Längsachse ausgeführt, damit die notwendige Achsverschränkung ausgeführt werden kann. Ein Drehpunkt 21 des Schwinghebels 6 liegt an der in Fahrtrichtung gesehenen vorderen Verbindungsachse 7 auf der - strichpunktiert gezeichneten - Wirkungslinie zwischen Gesamtschwerpunkt 22 des Fahrzeuges und einem Aufstandspunkt 23 der Reifen 24 der Räder. Dadurch ist der Drehpunkt 21 des Schwinghebels 6 während eines Bremsmanövers mit den Bremsen nicht durch Drehmomente aufgrund der Bremskräfte zusätzlich belastet und es tritt keine Federrückwirkung durch die Bremskräfte auf.

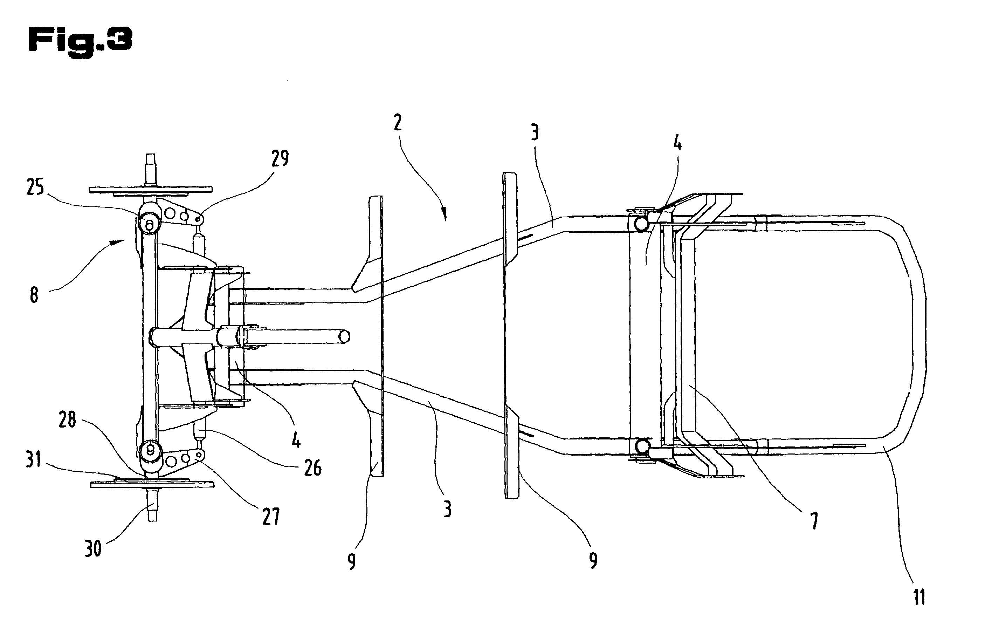

Gemäß der Fig. 3 weist der Hauptrahmen 2, bestehend aus den Seitenhohlprofilen 3 und den Drehfedern 4, die Aufnahmen 9 für die Verkleidung des Fahrzeuges auf. Über die, in Fahrtrichtung gesehen, hintere Drehfeder 4 kann der Tragrahmen 11 hinaus ragen.

An der hinteren Drehfeder 4 ist auch die Verbindungsachse 7 über die Schwinghebel 6 angeordnet. Diese Verbindungsachse 7 kann gekröpft, beispielsweise für die Anordnung des Antriebes, ausgeführt sein.

An der vorderen Drehfeder 4 ist die vordere Verbindungsachse 7 mit der beidseitigen Lagerung 8, insbesondere in diesem Fall mit einer Achsschenkellagerung 25 und der Lenkkonstruktion, die als Kassettenkonstruktion ausgeführt ist, angeordnet. Die Lenkkonstruktion besteht im wesentlichen aus einer Spurstange 26, die über je ein Kugelgelenk mit beidseits angeordneten Lenkhebeln 27 verbunden ist. Die Lenkhebel 27 sind wiederum mit Achsschenkeln 28 verbunden, die über die Achsschenkellagerung 25 mit der Verbindungsachse 7 eine Einheit bilden. Da die Spurstange 26 über ein Kugelgelenk 29 mit den Lenkhebeln 27 der Achsschenkel 28 verbunden ist, ist in gewissem Umfang eine Schwenkbewegung der Spurstange 26 um ihre Längsachse gegeben.

An den Achsschenkel 28 sind Radnaben 30 für die Radlagerung vorgesehen, wobei diese Radnaben 30 mit Bremsscheiben 31 versehen sind.

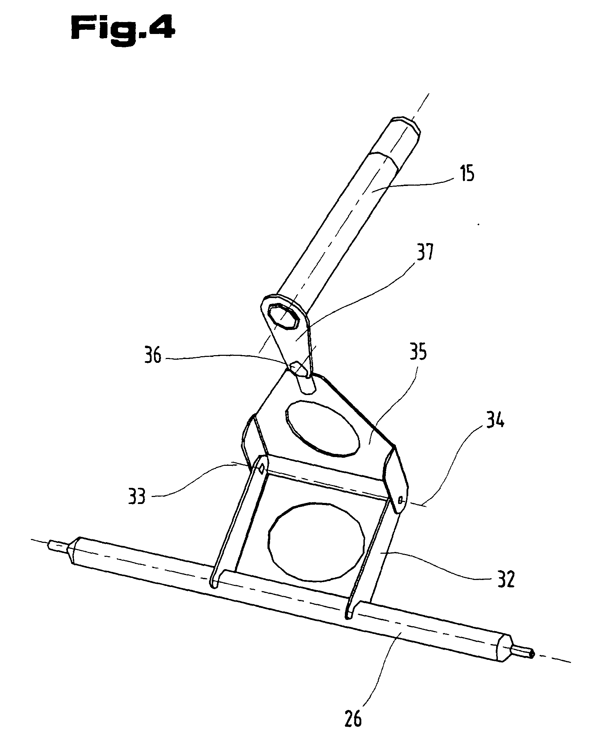

Gemäß der Fig. 4 ist die Lenkkonstruktion im Detail aufgezeigt. An der Spurstange 26 ist starr ein Spurstangenhebel 32 angeordnet, bei dem am oberen Ende ein Drehgelenk 33, dessen Drehachse 34 parallel zur Spurstange 26 liegt, vorgesehen ist. Am Drehgelenk 33 ist in der Drehachse 34 am Spurstangenhebel 32 ein Zwischenhebel 35 angelenkt, der somit um eine zur Spurstange 26 parallele Achse schwenkbar ist. Der Zwischenhebel 35 ist über ein Kurbelgelenk 36 gelenkig mit einem Lenkexzenter 37, der am Steuerrohr 15 befestigt ist, verbunden.

Diese Lenkkonstruktion überträgt Bewegungen des Lenkexzenters 37 über die Spurstange 26 parallel zu ihr unmittelbar auf die Gelenke für die Verstellung der Räder. Darüber hinaus kann diese Lenkkonstruktion den veränderlichen Abstand des Lenkexzenters 37 senkrecht zur Spurstange 26 ausgleichen.

### Bezugszeichenaufstellung

- 1: Fahrzeugunterbau
- 2: Hauptrahmen
- 3: Seitenhohlprofil
- 4: Drehfeder
- 5: Knotenblech

- 6: Schwinghebel
- 7: Verbindungsachse
- 8: Lagerung
- 9: Aufnahme
- 10: Stütze

- 11: Tragrahmen
- 12: Profil
- 13: Verstärkung
- 14: Steuerkonsole
- 15: Steuerrohr

- 16: Verbindungsglied
- 17: Lenker
- 18: Drehfederrohr
- 19: Drehfederachse
- 20: Elastomerelement

- 21: Drehpunkt
- 22: Gesamtschwerpunkt
- 23: Aufstandspunkt
- 24: Reifen
- 25: Achsschenkellagerung

- 26: Spurstange
- 27: Lenkhebel
- 28: Achsschenkel
- 29: Kugelgelenk
- 30: Radnabe

- 31: Bremsscheibe
- 32: Spurstangenhebel
- 33: Drehgelenk
- 34: Drehachse
- 35: Zwischenhebel

- 36: Kurbelgelenk
- 37: Lenkexzenter

## Patentansprüche

1. Fahrzeugunterbau bzw. Chassis für ein vierräderiges, angetriebenes Fahrzeug zur Beförderung von vorzugsweise mindestens einer Person, wobei ein Hauptrahmen (2) als eine Anordnung von geschlossenen Hohlprofilen ausgeführt ist, **dadurch gekennzeichnet, daß** der Hauptrahmen (2) aus zwei Seitenhohlprofilen (3) und zwei Drehstabfedern (4) besteht und als etwa ringförmige, biege- und drillsteife Anordnung ausgeführt ist, wobei die Drehstabfedern (4) gegenüberliegend mit quer zur Fahrtrichtung vorgesehener Drehachse angeordnet sind und die Drehstabfedern (4) Außenrohre (18) aufweisen, wobei die Außenrohre (18) mit den Seitenhohlprofilen (3) des Hauptrahmens (2) über Knotenbleche (5) verbunden sind und daß an den Drehstabfedern (4) über Schwinghebel (6) eine biegestarre Verbindungsachse (7), die an ihren Enden für die Räder eine Lagerung (8) aufweist, vorgesehen ist, wobei die Verbindungsachse (7) im Bereich zwischen den, in ihrer Längsachse drillweich ausgeführten, Schwinghebeln (6) als drillweiches Profil ausgeführt ist.

2. Fahrzeugunterbau nach Anspruch 1, **dadurch gekennzeichnet, daß** alle Verbindungen der einzelnen Teile ausschließlich als Schweißnähte ausgeführt sind.

3. Fahrzeugunterbau nach Anspruch 1 oder 2, **dadurch gekennzeichnet, daß** die Drehstabfeder (4) aus zwei konzentrisch angeordneten Hohlprofilen besteht, wobei zwischen den Hohlprofilen, vorzugsweise nur im Bereich der Anordnung des Schwinghebels (6), mindestens ein Elastomerelement (20) vorgesehen ist.

4. Fahrzeugunterbau nach einem oder mehreren der vorhergehenden Ansprüche, **dadurch gekennzeichnet, daß** die Drehstabfeder (4) aus dem Außenrohr (18), dem Elastomerfederelement (20) und der Drehstabfederachse (19) besteht.

5. Fahrzeugunterbau nach einem oder mehreren der vorhergehenden Ansprüche, **dadurch gekennzeichnet, daß** die Verbindung von den Seitenhohlprofilen (3) zu weiteren Anschlußprofilen über beiderseits des Seitenhohlprofils (3) angeordnete, ebene Knotenbleche (5) erfolgt.

6. Fahrzeugunterbau nach einem oder mehreren der vorhergehenden Ansprüche, **dadurch gekennzeichnet, daß** die Verbindungsachse (7) im Bereich zwischen den Schwinghebeln (6) als offenes Profil ausgeführt ist.

7. Fahrzeugunterbau nach einem oder mehreren der vorhergehenden Ansprüche, **dadurch gekennzeichnet, daß** die Verbindungsachse (7) im Bereich zwischen Schwinghebel (6) und Lagerung (8), insbesondere der Achsschenkellagerung (25), eine biege- und drillsteife Verstärkung (13) aufweist.

8. Fahrzeugunterbau nach einem oder mehreren der vorhergehenden Ansprüche, **dadurch gekennzeichnet, daß** die Verbindungsachse (7) im Bereich zwischen Schwinghebel (6) und Lagerung (8), insbesondere der Achsschenkellagerung (25), als Hohlprofil ausgeführt ist.

9. Fahrzeugunterbau nach einem oder mehreren der vorhergehenden Ansgrüche, **dadurch gekennzeichnet, daß** die Schwinghebel (6) starr mit der Verbindungsachse (7) verbunden sind.

10. Fahrzeugunterbau nach einem oder mehreren der vorhergehenden Ansprüche, **dadurch gekennzeichnet, daß** die Schwinghebel (6) eine dünnwandige flache Form aufweisen.

11. Fahrzeugunterbau nach einem oder mehreren der vorhergehenden Ansprüche, **dadurch gekennzeichnet, daß** die Drehachse (21) des Schwinghebels (6) an der in Fahrtrichtung gesehenen vorderen Verbindungsachse (7) auf der Wirkungslinie zwischen Gesamtschwerpunkt (22) des Fahrzeuges und dem Aufstandspunkt (23) der Räder liegt.

12. Fahrzeugunterbau nach einem oder mehreren der vorhergehenden Ansprüche, **dadurch gekennzeichnet, daß** sämtliche Hohlprofile senkrechte Trennschnitte aufweisen.

13. Fahrzeugunterbau nach einem oder mehreren der vorhergehenden Ansprüche, **dadurch gekennzeichnet, daß** ein Lenkgestänge vorgesehen ist, bestehend aus einem starr mit einer Spurstange (26) verbundenen Spurstangenhebel (32) sowie einem über eine zur Spurstange (26) parallele Drehachse (34) am Spurstangenhebel (32) schwenkbaren Zwischenhebel (35), der über ein Kurbelgelenk (36) mit einem Lenkexzenter (37) verbunden ist.

## Claims

1. Vehicle undercarriage or chassis for a four-wheeled, driven vehicle for transporting at least one person, whereby at least one main frame (2) is provided as an arrangement of closed hollow profiles, **characterised by** the fact that the main frame (2) consists of two lateral hollow profiles (3) and two torsion springs (4), and is configured as a roughly ringshaped, flexure- and torsion-resistant arrangement, whereby the torsion springs (4) are diametrally opposed with an axis of revolution that runs crosswise in relation to the direction of travel, and the torsion springs (4) have outer tubes (18), whereby the outer tubes (18) are connected to the lateral hollow profiles (3) of the main frame (2) with gusset plates (5), and that a flexurally resistant connecting pin (7) is provided on the torsion springs (4) with an oscillating lever (6), the connecting pin (7) having a mounting (8) at its ends for the wheels, whereby the connecting pin (7) is designed as a profile with low torsion resistance in the area between the oscillating levers (6), also designed with low torsion-resistance along the longitudinal axis.

2. Vehicle undercarriage in accordance with Claim 1, **characterised by** the fact that all the connections between the individual parts are made exclusively with welding joints.

3. Vehicle undercarriage in accordance with Claim I or 2, **characterised by** the fact that the torsion spring (4) consists of two concentrically arranged hollow profiles, whereby at least one elastomer element (20) is provided between the hollow profiles, preferably in the area of mounting of the oscillating lever (6).

4. Vehicle undercarriage in accordance with one or more of the above Claims, **characterised by** the fact that the torsion spring (4) consists of an outer tube (18), an elastomer spring element (20) and a torsion spring axis (19).

5. Vehicle undercarriage in accordance with one or more of the above Claims, **characterised by** the fact that the connection between the lateral hollow profiles (3) and other connecting profiles is achieved by flat gusset plates (5) arranged on both sides of the lateral hollow profile (3).

6. Vehicle undercarriage in accordance with one or more of the above Claims, **characterised by** the fact that the connecting pin (7) is configured as an open profile in the area between the oscillating levers (6).

7. Vehicle undercarriage in accordance with one or more of the above Claims, **characterised by** the fact that the connecting pin (7) has a flexure- and torsion-resistant reinforcement (13) in the area between the oscillating lever (6) and the mounting (8), in particular the steering stub mounting (25).

8. Vehicle undercarriage in accordance with one or more of the above Claims, **characterised by** the fact that the connecting pin (7) is designed as a hollow profile in the area between the oscillating lever (6) and the mounting (8), in particular the steering stub mounting (25).

9. Vehicle undercarriage in accordance with one or more of the above Claims, **characterised by** the fact that the oscillating lever (6) is connected rigidly to the connecting pin (7).

10. Vehicle undercarriage in accordance with one or more of the above Claims, **characterised by** the fact that the oscillating lever (6) has a thin-walled, flat shape.

11. Vehicle undercarriage in accordance with one or more of the above Claims, **characterised by** the fact that the rotation axis (21) of the oscillating lever (6) lies on the front connecting pin (7) facing in the direction of travel, on the line of efficacy between the overall centre of gravity (22) of the vehicle and the contact point (23) of the wheels.

12. Vehicle undercarriage in accordance with one or more of the above Claims, **characterised by** the fact that all the hollow profiles have vertical parting sections.

13. Vehicle undercarriage in accordance with one or more of the above Claims, **characterised by** the fact that a steering linkage is provided, consisting of a steering rod lever (32) connected rigidly to a steering rod (26), as well as a relay lever (35) capable of swivelling on the steering rod lever (32) around a rotational axis (34) parallel to the steering rod (26) and which is connected to an eccentric shaft (37) by a crank joint (36).

## Revendications

1. Châssis pour un véhicule quatre roues motorisé destiné, de préférence, au transport d'au minimum une personne, un cadre principal (2) étant réalisé en assemblage de profilés creux fermés, **caractérisé en ce que** le cadre principal (2) comporte deux profilés creux latéraux (3) et deux ressorts à barre de torsion (4) et est réalisé en un arrangement approximativement circulaire résistant à la flexion et à la torsion, les ressorts à barre de torsion (4) étant juxtaposés avec un axe de rotation perpendiculaire au sens de marche et les ressorts à barre de torsion (4) comportant des tuyaux extérieurs (18), ces tuyaux extérieurs (18) étant reliés aux profilés creux latéraux (3) du cadre principal (2) à l'aide de plaques gousset (5), et **en ce que** les ressorts à barre de torsion (4) comportent un axe de connexion (7) rigide relié à l'aide de leviers oscillants (6) et présentant un logement (8) pour les roues à ses extrémités, l'axe de connexion (7) étant conçu en tant que profilé à faible résistance à la torsion dans la section comprise entre les leviers oscillants (6) conçus, eux aussi, avec une faible résistance à la torsion suivant leur axe longitudinal.

2. Châssis de véhicule selon la revendication 1, **caractérisé en ce que** toutes les connexions des différents éléments sont exclusivement réalisées par des soudures.

3. Châssis de véhicule selon la revendication 1 ou 2, **caractérisé en ce que** le ressort à barre de torsion (4) comporte deux profilés creux disposés de manière concentrique, au minimum un élément d'élastomère (20) étant prévu entre les profilés creux, de préférence uniquement au niveau de l'assemblage du levier oscillant (6).

4. Châssis de véhicule selon une ou plusieurs des revendications ci-dessus, **caractérisé en ce que** le ressort à barre de torsion (4) comporte le tuyau extérieur (18), l'élément de ressort en élastomère (20) et l'essieu à ressort à barre de torsion (19).

5. Châssis de véhicule selon une ou plusieurs des revendications ci-dessus, **caractérisé en ce que** la connexion entre les profilés creux latéraux (3) et d'autres profilés de connexion est réalisée par des plaques gousset (5) planes disposées des deux côtés du profilé creux latéral (3).

6. Châssis de véhicule selon une ou plusieurs des revendications ci-dessus, **caractérisé en ce que** l'axe de connexion (7) est conçu en tant que profilé ouvert dans la section comprise entre les leviers oscillants (6).

7. Châssis de véhicule selon une ou plusieurs des revendications ci-dessus, **caractérisé en ce que** l'axe de connexion (7) présente un renforcement (13) résistant à la flexion et à la torsion dans la section comprise entre le levier oscillant (6) et le logement (8), notamment le logement de la fusée d'essieu (25).

8. Châssis de véhicule selon une ou plusieurs des revendications ci-dessus, **caractérisé en ce que** l'axe de connexion (7) est conçu en tant que profilé creux dans la section comprise entre le levier oscillant (6) et le logement (8), notamment le logement de la fusée d'essieu (25).

9. Châssis de véhicule selon une ou plusieurs des revendications ci-dessus, **caractérisé en ce que** les leviers oscillants (6) sont rigidement reliés à l'axe de connexion (7).

10. Châssis de véhicule selon une ou plusieurs des revendications ci-dessus, **caractérisé en ce que** les leviers oscillants (6) présentent une forme plate à faible épaisseur de paroi.

11. Châssis de véhicule selon une ou plusieurs des revendications ci-dessus, **caractérisé en ce que** l'axe de rotation (21) du levier oscillant (6) est positionné sur l'axe de connexion (7) avant, vu dans le sens de marche, sur la ligne d'effet entre le centre de gravité total (22) du véhicule et le point de contact (23) des roues.

12. Châssis de véhicule selon une ou plusieurs des revendications ci-dessus, **caractérisé en ce que** l'ensemble des profilés creux présente des coupes de séparation verticales.

13. Châssis de véhicule selon une ou plusieurs des revendications ci-dessus, **caractérisé en ce qu'**il est prévu une timonerie comportant un levier sur porte-fusée (32) rigidement relié à une barre d'accouplement (26), ainsi qu'un levier intermédiaire (35) pivotant selon un axe de rotation (34) parallèle à la barre d'accouplement (26) sur le levier sur porte-fusée (32), ce levier intermédiaire (35) étant relié à un arbre excentrique (37) à l'aide d'une articulation à manivelle (36).
